# EUROPÄISCHE PATENTSCHRIFT

(11) **EP 2 926 974 B1**
(45) Veröffentlichungstag und Bekanntmachung des Hinweises auf die Patenterteilung: **08.01.2020**
(21) Anmeldenummer: 14163411.3
(22) Anmeldetag: 03.04.2014
(51) Int. Cl.: B29C 48/025, B29C 48/90, B29C 48/885, B29C 48/25

(54) **Duo-Kühl- und Kalibriereinheit für die Extrusion von Kunststoffhohlprofilen in paarweise nebeneinander zu betreibenden Extrusionslinien**
Dual cooling and calibrating unit for the extrusion of hollow plastic profiles in adjacent extrusion lines operated in pairs
Unité double de refroidissement et d'étalonnage pour l'extrusion de profilés en matière synthétique dans des lignes d'extrusion devant fonctionner côte à côte par paires

(43) Veröffentlichungstag der Anmeldung: 07.10.2015
(73) Patentinhaber: Veka AG, 48324 Sendenhorst (DE)
(72) Erfinder: Drees, Daniel, 48324 Sendenhorst (DE)
(74) Vertreter: Tarvenkorn, Oliver

(56) Entgegenhaltungen:
- EP-A2- 2 368 688
- WO-A1-2010/115914
- WO-A2-2004/037516
- CA-A1- 2 144 719
- DE-U1- 29 803 298

## Beschreibung

Die Erfindung betrifft eine Duo-Kühl- und Kalibriereinheit für die Extrusion von Kunststoffhohlprofilen in paarweise nebeneinander zu betreibenden Extrusionslinien, mit den Merkmalen des Oberbegriffs des Anspruchs 1.

Die Extrusion von Kunststoffprofilen ist, wie in den Druckschriften WO 2004/037516 A2, DE 298 03 298 U1 und CA 2 144 719 A1 offenbart, nur dann wirtschaftlich zu betreiben wenn eine Extrusionslinie, welche regelmäßig einen Extruder mit einem Düsenwerkzeug sowie eine Kühl- und Kalibrierungsvorrichtung und ggf. eine Abzugsvorrichtung umfasst, über einen längeren Zeitraum kontinuierlich betrieben wird. Um einen Profilwechsel vorzunehmen, muss der Produktionsprozess vollständig unterbrochen werden, das Düsenwerkzeug muss ausgetauscht werden, und es sind danach umfangreiche Einstellarbeiten erforderlich, um nach dem Anfahren erneut ein maßhaltiges Profil zu erhalten. Aus diesem Grund werden bei der Herstellung von Kunststoffprofilen, wie insbesondere Profilen für Türen, Fenster und Rollläden, stets eine Vielzahl von Extrusionslinien gleichzeitig betrieben, um die benötigte Vielfalt an unterschiedlichen Profilformen abdecken zu können, ohne die Produktion häufig unterbrechen zu müssen. Dies zieht jedoch einen großen Platzbedarf nach sich. In Abzugsrichtung wird für jede einzelne Extrusionslinie bereits eine beträchtliche Länge von etwa 20 m benötigt, um den Extruder und die Kühl- und Kalibriervorrichtung hintereinander positionieren zu können, und um in der Längsrichtung auch noch Platz für eine Abzugsvorrichtung und gegebenenfalls eine Verpackungsvorrichtung vorzusehen. Hinzu kommen Verkehrswegeflächen für den Abtransport der Profile mit Flurförderfahrzeugen. Eine Vielzahl von Extrusionslinien kann aufgrund der großen Länge jeder einzelnen Extrusionslinie daher in der Regel nicht hintereinander, sondern nur parallel nebeneinander aufgestellt werden.

Damit alle Aggregate an einer Extrusionslinie zugänglich sind, wie insbesondere der Extruder, der für die Kalibrierung von Hohlprofilen benötigte Vakuumstank samt einer Vakuumpumpe sowie die allgemein für die Kühlung und Kalibrierung der Profile benötigte Wasserpumpe und der zugehörige Wassertank, müssen zwischen den einzelnen Extrusionslinien Gänge freigehalten werden, durch die das Bedienungspersonal entlang der Extrusionslinie gehen kann und die so breit bemessen sind, dass von beiden Seiten Verkleidungsteile geöffnet bzw. abgenommen werden können, so dass die notwendigen Wartungsarbeiten von der Seite her durchgeführt werden können. Dies betrifft insbesondere die Kühl- und Kalibriereinheit, bei der der Durchfluss des Wassers sowie das anliegende Vakuum ständig kontrolliert und nachgeregelt werden muss, wohingegen der Extruder mit seinem Düsenwerkzeug üblicherweise fernbedienbar ist und von der Oberseite her mit Rohmaterial beschickt wird, so dass eine Zugänglichkeit zum Extruder von beiden Seiten während des Produktionsprozesses im Normalfall nicht erforderlich ist, jedoch im Wartungsfall. Bei der Aufstellung einer Vielzahl von Extrusionslinien muss also insbesondere wegen der Kühl- und Kalibriereinheiten stets eine Gangfläche zwischen zwei Extrusionslinien freigehalten werden. Damit reduziert sich die bei gegebener Breite einer Produktionshalle mögliche Zahl von darin installierbaren Extrusionslinien beträchtlich.

Die Aufgabe der vorliegenden Erfindung besteht somit darin, die Flächennutzung in einer Produktionshalle bei der Extrusion von Kunststoffprofilen und Kunststoffhohlprofilen zu verbessern und die Zahl von darin installierbaren Extrusionslinien deutlich zu vergrößern.

Diese Aufgabe wird gemäß der vorliegenden Erfindung durch eine Duo-Kühl- und Kalibriereinheit mit den Merkmalen des Anspruchs 1 gelöst.

Erfindung wesentlich ist, dass zwei Mono-Einheiten vorgesehen sind, die spiegelbildlich zueinander ausgebildet sind und die mit ihren jeweiligen Installationsarbeiten Rücken an Rücken aufstellbar sind. Damit entfällt eine Gangbreite zwischen den beiden Mono-Grundmodulen. Da eine Gangbreite in etwa genauso breit ist wie eine Extrusionslinie, können fast 50% mehr Extrusionslinien auf derselben Produktionsfläche aufgestellt werden. Durch die zielgerichtete, spiegelbildliche Ausbildung der Mono-Kühl- und Kalibriereinheiten werden diejenigen Teile, die während der normalen Produktion und bei den turnusgemäßen Wartungsarbeiten nicht oder nur selten zugänglich sein müssen, gezielt an die so genannte Installationsseite verlegt, wohingegen die Elemente, die für Einstellarbeiten während der Produktion jederzeit zugänglich sein sollten oder bei denen häufiger Störungen zu erwarten sind, an die dem Gang zuzuwendende, sogenannte Bedienseite verlegt werden.

Konkret bedeutet dies, dass z. B. die Tanks für das Wasser und für das Vakuum an der Installationsseite positioniert sind, während die Pumpen für das Wasser und für das Vakuum an die Bedienseite gelegt sind.

Zwischen dem Wasserkreislauf bzw. dem Vakuumkreislauf und den auf das Grundgestell aufgesetzten Kühl- und Kalibrierelementen wie einem Vakuumstank oder einer wassergekühlten Kalibrierungsblende müssen Verbindungen hergestellt werden. Hierzu sind erfindungsgemäß Leitungsanschlusselemente an der Bedienseite vorgesehen, die z.B. eine steckbare Verbindung ermöglichen sowie eine Durchflussregelung. Der Bediener kann also vom Gang aus bei Bedarf zusätzliche Kühl- oder Vakuumschläuche einsetzen oder verschmutzte Schläuche austauschen.

Durch die spiegelbildliche Ausbildung der Mono-Einheiten ist es zwar notwendig, zwei unterschiedliche Typen von Mono-Kühl- und Kalibriereinheiten zu fertigen, nämlich für eine in Extrusionsrichtung gesehen linke und für eine rechte Seite eines Paars von Extrusionslinien. Dennoch ist der Produktionsaufwand gegenüber der Fertigung absolut baugleicher Einheiten kaum höher, da die eingebauten Elemente, wie beispielsweise Tanks und Pumpen baugleich sein können und nur die Anschlussleitungen bei einer rechten Mono-Einheit gegenüber einer linken Mono-Einheit spiegelbildlich zu legen sind.

Die Aufteilung in spiegelbildliche Mono-Einheiten mit je einem Mono-Grundmodul, das sämtliche benötigte Aggregate enthält, bringt den weiteren Vorteil mit sich, dass es sich jeweils um autarke Duo-Kühl- und Kalibriereinheiten handelt, die zwar vorzugsweise in paarweiser Aufstellung verwendet werden, um den Flächenbedarf zu senken, die jedoch unabhängig voneinander betrieben werden können. Ein Ausfall eines Aggregats an einer Mono-Einheit beeinträchtigt die Produktion in der anderen Mono-Einheit nicht. Soweit ausreichende Produktionsfläche zur Verfügung steht, ist es sogar möglich, jede Mono-Einheit durch einen weiteren Gang zwischen den so genannten Installationsseiten der Grundmodule getrennt voneinander aufzustellen.

Es ist vorgesehen, dass die Länge einer Mono- Kühl- und Kalibriereinheit durch jeweils wenigstens ein an das Mono-Grundmodul angesetztes Mono-Tendermodul erweiterbar ist, das ebenfalls eine obere Aufsatzebene besitzt, und zwar auf dem gleichen Höhenniveau wie das Grundmodul. Das Mono-Tendermodul wird von dem jeweiligen Mono-Grundmodul mit Energie, Wasser und Vakuum mitversorgt. Es braucht also keine zusätzlichen Elemente wie Pumpen oder Tanks zu enthalten, so dass nicht notwendigerweise zwei unterschiedliche, spiegelbildlich zueinander ausgebildete Mono-Tendermodule vorgesehen sein müssen. Es kann vielmehr ein einheitliches Mono-Tendermodul zur Verlängerung des rechten wie des linken Mono-Grundmoduls vorgesehen sein.

Soweit Leitungsanschlusselemente an der Bedienseite auch beim Mono-Tendermodul gewünscht sind, kann dennoch ein einheitliches Mono-Tendermodul verwendet werden, das dann jeweils für das rechte oder linke Mono-Grundmodul um 180° gedreht aufgestellt wird.

Vorteilhaft ist weiterhin, wenn an jedem Mono-Grundmodul und ggf. auch an dem angekoppelten Mono-Tendermodul eine Höhenverstelleinrichtung vorgesehen ist, die es erlaubt, die Höhe der jeweiligen oberen Aufsatzebene anzupassen, um die Kühl- und Kalibrierelemente jener Art des hergestellten Profils gegenüber dem Düsenwerkzeug des Extruders höher oder tiefer positionieren zu können und um Unebenheiten in der auf Stellfläche ausgleichen zu können.

Die Höhenverstellung ist bevorzugt über wenigsten zwei mit Abstand zueinander positionierte und schwenkbar am jeweiligen Grundmodul gelagerte Rolleneinheiten gebildet, wobei eine Zugstange an einem insbesondere geköpft ausgebildeten Hebelarm der Rolleneinheit angreift. Die Zugstange kann über einen Elektromotor oder einen Hydraulikzylinder bewegt werden, wodurch die Rollen an der Rolleneinheit dann mit Verschwenken des Hebelarms höher oder tiefer gegenüber dem Grundmodul positioniert wird. Der Vorteil dieser Ausbildung einer Höhenverstelleinrichtung liegt darin, dass die Zugstange auf einfache Weise verlängert werden kann. Damit kann auch ein Mono-Tendermodul, das ebenfalls mit wenigstens einer schwenkbar gelagerten Rolleneinheit versehen ist, einfach an die Höhenverstelleinrichtung des Grundmoduls angekurbelt werden, indem eine Kopplung einer eigenen Zugstange mit der Zugstange am Grundmodul hergestellt wird.

Bevorzugt sind alle Mono-Kühl- und Kalibriereinheiten wie auch die angehängten Tendermodule über die Länge gleich breit, das heißt es ergibt sich eine in der Draufsicht rechteckige Stellfläche. Zumindest ist die sogenannte Installationsseite vollständig geradlinig und parallel zur Extrusionsrichtung ausgebildet. Das ermöglicht es, die beiden Mono-Einheiten spaltfrei miteinander zu kombinieren. Es wird so verhindert, dass bei Arbeiten an Einheiten auf der Aufsatzebene der Grundgestelle Teile oder Werkzeuge zwischen zwei Module geraten und dann nur noch schwer zurückgeholt werden können.

Eine sinnvolle Ausbildung sieht an der Installationsseite von wenigstens einer Mono-Einheit eine vom dem Grundgestell aufragende Trennwand vor, die zusätzlich verhindert, dass von einer Extrusionslinie irgendwelche Störeinflüsse durch Bediener, Teile oder Wasser auf die jeweilige andere Extrusionslinie übergehen.

Zu den Installationsseiten können auch die stirnseitigen Abschnitte des Mono-Grundmoduls bzw. des Mono-Tendermoduls gezählt werden, sofern sie vom Bediener jederzeit zugänglich sind, so dass auch noch seitlich zugängliche Aggregate eingebaut werden können.

Die Erfindung wird nachfolgend mit Bezug auf die Zeichnung näher erläutert. Die Figuren zeigen im Einzelnen:
- Fig. 1: eine Doppel-Extrusionsanlage in perspektivischer Ansicht;
- Fig. 2: eine Duo-Kühl- und Kalibriereinheit in perspektivischer Ansicht;
- Fig. 3: eine Doppel-Extrusionsanlage in schematischer Ansicht von oben.
- Fig. 4: ein rechtes Mono-Grundmodul von der Installationsseite her in perspektivischer Ansicht;
- Fig. 5: ein Detail eines Mono-Grundmoduls mit einer Höhenverstellung.

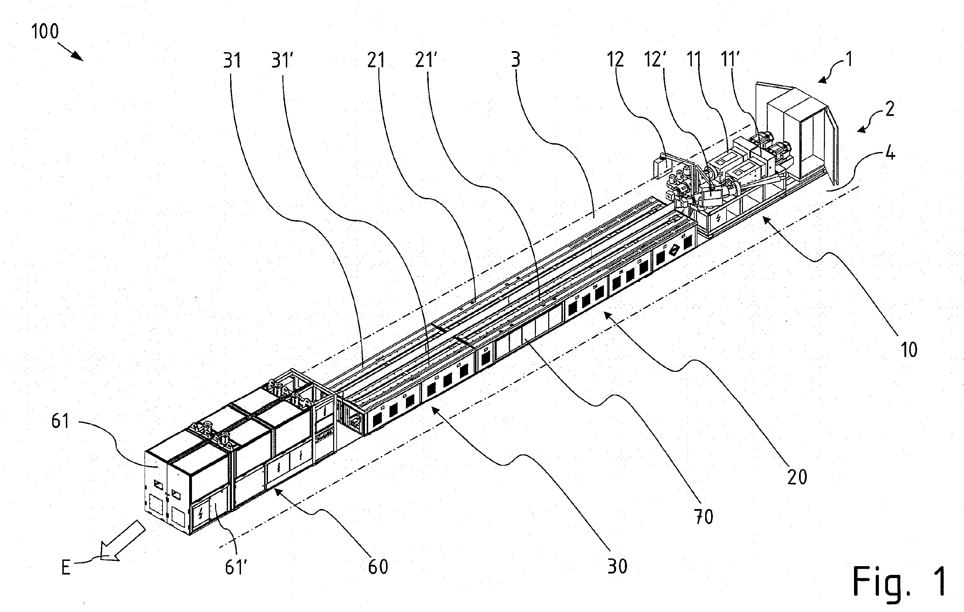

Figur 1 zeigt eine vollständige Doppel-Extrusionsanlage 100 zur Herstellung von Kunststoffprofilen, die zwei paarweise nebeneinander zu betreibende, für sich aber jeweils allein funktionsfähige Mono-Extrusionslinien 1, 2 umfasst. Betrachtet man die Anlagenteile von rechts oben nach links unten entsprechend der Abzugsrichtung E der extrudierten Profile, dann gliedert sich die Doppel-Extrusionsanlage 100 in:
- eine Duo-Extrudereinheit 10 mit jeweils einem rechten und einem linken Mono-Extruder 11, 11'
- eine Duo-Kühl- und Kalibriereinheit 20 mit jeweils einem rechten und einem linken Mono-Grundmodul 21, 21';
- einen Duo-Verlängerungsbereich 30 zur Duo-Kühl- und Kalibriereinheit 20, um mittels zweier Mono-Tendermodulen 31, 31' eine größere Kühlstrecke realisieren zu können, sowie
- eine Duo-Abzugseinheit 60 mit jeweils einer rechten und einem linken Mono-Abzugseinheit 61, 61'.

Die Extruder 11, 11' sind vorzugsweise als spiegelbildliche Mono-Einheiten aufgebaut, so dass die für die Bedienung erforderlichen Teile, wie insbesondere eine Bedieneinheit 12, 12', an der so genannten Bedienseite der Extrusionslinie 1, 2 angeordnet sind- Die Bedienseiten sind jeweils den Gängen 3, 4 zugewandt, welche vor den Anlagen verlaufen und in Figur 1 durch die strichpunktierte Linien abgegrenzt sind.

Die in Extrusionsrichtung E jeweils von der Bedienseite 3, 4 abgewandt liegenden Seiten werden als Installationsseiten bezeichnet. Die Mono-Extrusionslinien 1 und 2 sind somit Rücken an Rücken mit ihren jeweiligen Installationsseiten aneinander geschoben oder wahren einen geringen Abstand zueinander, der aber wesentlich kleiner ist als eine Gangbreite eines Ganges 3, 4.

Die Duo-Kühl- und Kalibriereinheit 20 setzt sich aus zwei Mono-Grundmodulen 21, 21' zusammen, die nachfolgend noch näher erläutert werden. Sie sind im dargestellten Ausführungsbeispiel einer Doppel-Extrusionsanlage 100 jeweils durch ein Mono-Tendermodul 31, 31' verlängert.

Die Duo-Abzugseinheit 60 bildet das Ende der Extrusionslinien 1, 2. Sie enthält zwei Abzugseinheiten 61, 61', die zunächst jeweils eine Abzugsvorrichtung enthalten, wie insbesondere eine Raupenabzugsvorrichtung, um das extrudierte Profil vom Düsenwerkzeug der Extruder 11, 11' durch die Kühl- und Kalibrierungseinheit 20 zu ziehen. Außerdem kann jede Mono-Abzugseinheit 61, 61' eine Säge enthalten, um die Profile auf eine bestimmte Stablänge zu kürzen. Ausgestoßen werden dann am Ende der beiden Extrusionslinien 1, 2 jeweils Profilabschnitte, die auf Paletten gestapelt und verpackt werden können.

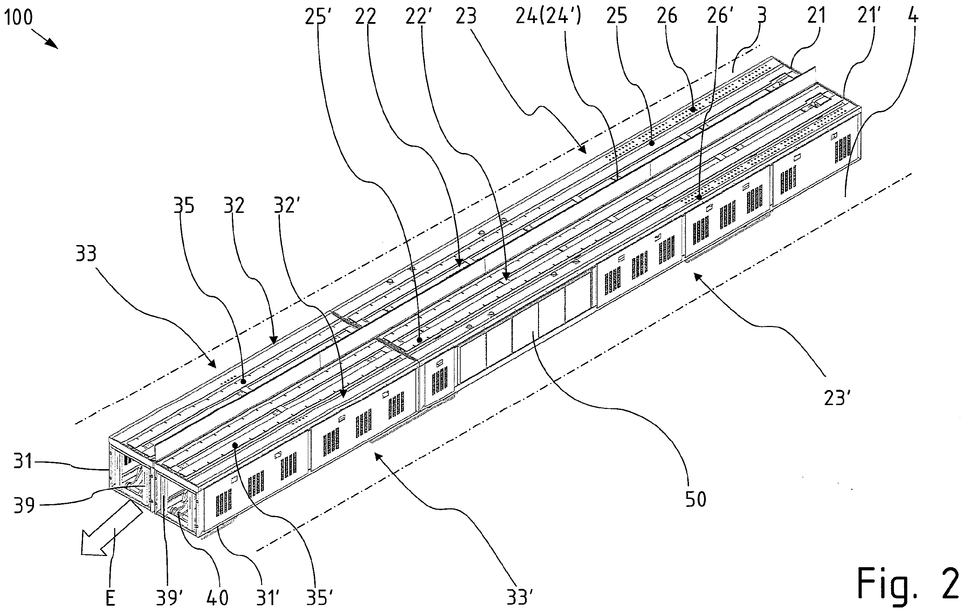

Die Duo-Kühl- und Kalibriereinheit 20 mit dem Duo- Verlängerungsbereich 30 zeigt Figur 2 in vergrößerter Darstellung.

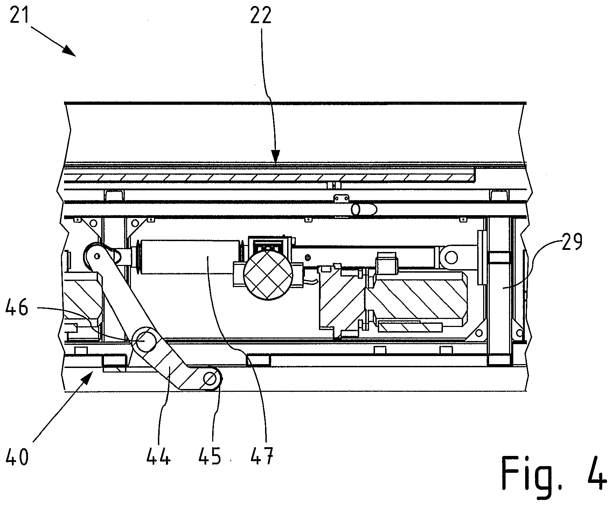

Die spiegelbildlich zueinander ausgebildeten Mono-Grundmodule 21, 21' wie auch die daran angesetzten Mono-Tendermodule 31, 31' besitzen jeweils ein tischförmiges Grundgestell 29 (siehe Fig. 4) bzw. 39, 39'. An ihrer jeweiligen dem Gang 3, 4 zugewandten Bedienseite 23, 23' bzw. 33, 33' sind Verkleidungen angebracht, um den Bediener vor den unten im Grundgestell angeordneten Antrieben und dergleichen zu schützen. An den jeweiligen von den Gängen abgewandten Installationsseiten 24, 24' ist eine Trennwand angeordnet, um die beiden Extrusionslinien 1, 2 voneinander abzuschirmen.

Jedes der Grundgestelle der Grundmodule 21, 21' besitzt eine obere Aufsatzebene 22, 22', auf welcher z. B. Kalibrierelemente und Kühltanks aufgesetzt werden können.

Damit die aufgesetzten Elemente in exakte Flucht sowohl mit den vorgeschalteten Extrudern 11, 11' wie auch mit den nachgeschalteten Abzugseinheiten 61, 61' gebracht werden können, ist auf den Aufsatzebenen 22, 22' jeweils eine Aufnahmeschiene 25, 25' zur Aufnahme der Kühl- und Kalibrierelemente angebracht, die gegenüber der Längsachse der Grundmodule schwenkbar gelagert ist, und zwar liegt die Schwenklagerachse bevorzugt an der den Extrudern 11, 11' zuzuwenden Seite. Eine geringfügige Schiefstellung der Mono-Grundmodule 21, 21' in der Aufstellung gegenüber den Extrudern 11, 11' kann somit über eine Winkelverstellung der Aufnahmeschiene ausgeglichen werden, so dass Spannungen in dem noch weichen und damit verformbaren Extrusionsprofil vermieden werden.

Weiterhin besitzen die Mono-Grundmodule 21, 21' in der Aufsatzebene 22, 22' und ihrer jeweiligen Bedienseite 23, 23' zugewandt eine Vielzahl von Anschlussverschraubungen 26, 26', um auf einfache Weise über Schläuche eine Vielzahl von Verbindungen der aufzusetzenden Kalibrierblenden und Kühltanks mit den unten im Grundgestell angeordneten Wasser-und Vakuumpumpen herzustellen.

Die Mono-Tendermodule 31, 31' sind hinsichtlich ihrer Grundgestelle 39, 39' weitgehend gleichartig zu den jeweiligen Grundgestellen 29 der Mono-Grundmodule 21, 21' ausgebildet, so dass sich eine einheitliche Breite ihrer Aufsatzebenen 32, 32' im Vergleich zu den Aufsatzebenen 22, 22' ergibt und auch die Höhe der Aufsatzebenen 32, 32' gleich ist.

Fig. 4 zeigt perspektivisch von oben ein rechtes Mono-Grundmodule 21, und zwar von der rückwärtigen Installationsseite 24 her gesehen. Verkleidungsteile sind hier nicht notwendig, da der Bediener nach dem Aufstellen und der Inbetriebnahme der Doppel-Extrusionsanlage 100 an diese Seite nicht mehr gelangen kann.

Erkennbar sind eine von der Stirnseite her zugängliche Vakuumpumpe 27.1 und ein Vakuumtank 28.1 im vorderen Bereich sowie ein Wassertank 27.2, der auch einen Luftabscheider enthält.

Um die Höhe der Aufsatzebenen 22, 32, 22', 32' an den Extrusionslinien 1, 2 an die Höhe der Mündungsöffnungen im Düsenwerkzeug der Extruder 11, 11' anpassen zu können, ist in jedem rechten und linken Mono-Grundmodul 21, 21' der Duo-Kühl- und Kalibriereinheit 20 eine separate Höhenverstelleinrichtung 40 vorgesehen, wobei jede Höhenverstelleinrichtung 40 wenigstens zwei schwenkbar am Grundmodul 21, 21' gelagerte Rolleneinheiten 41, 42 umfasst. Wie in Fig. 4 erkennbar, ist eine dritte Rolleneinheit 43 an dem frei liegenden Ende des Tendermoduls 31 vorgesehen.

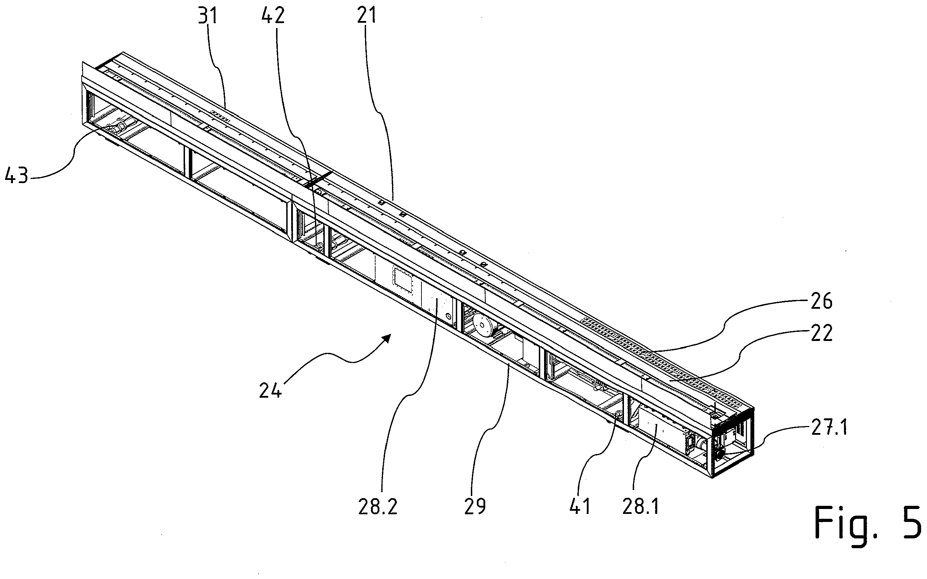

Figur 5 zeigt im Detail den Aufbau einer Rolleneinheit 41. Diese besitzt wenigstens, vorzugsweise mehrere hintereinander liegende, und jeweils einen gekröpft ausgebildete Hebelarme 44, an deren zum Boden weisenden Ende Schwerlastrollen 45 oder gelenkig gelagerte Stützteller angeordnet sind. Der Hebelarm 44 ist an einem Lager 46 am Grundgestell 29 gelagert und steht mit seinem anderen Ende mit einem Antrieb, hier in Form eines Hydraulikzylinders 47, in Verbindung. Um die weiteren, Rolleneinheiten mit anzutreiben, greift eine Zugstange an dem Hebelarm an, die zu dem entsprechenden Hebelarm, der anderen Rolleneinheiten 42, 43 führt.

Auch die linken und rechten Mono-Tendermodule 31, 31' besitzen beide eine Höhenverstelleinrichtung 39, 39', wovon in Figur 2 jeweils die einseitig angeordneten Rolleneinheiten mit ihren geköpften Hebelarmen erkennbar sind. Die Höhenverstelleinrichtungen 39, 39' der Mono-Tendermodule 31, 31 besitzen jedoch keinen eigenen motorischen Antrieb, sondern sind mit einer Kopplungsmöglichkeit ausgestattet, um an die Höhenverstelleinrichtung der Duo-Kühl- und Kalibriereinheiten 21, 21' anzukoppeln. Insbesondere wird eine Zugstange an der Höhenverstelleinrichtung mit der motorisch angetriebenen Zugstange der Duo-Kühl- und Kalibriereinheiten 21, 21' verbunden.

Weiterhin besitzen die Mono-Tendermodule 31, 31' auf ihrer jeweiligen Aufsatzebene 33, 33' auch eine Aufsatzschiene 35, 35', um die Kühlstrecke und die Elemente für die Nachkalibrierung verlängern zu können. Die Aufsatzschienen 35, 35' können ebenfalls winkelverstellbar ausgebildet sein. Da das extrudierte Profil im Bereich der Mono-Tendermodule 31, 31' jedoch schon weitgehend abgekühlt ist, kann ein Winkelversatz in Bezug auf die nachfolgenden Abzugseinheiten 61, 61' eher in Kauf genommen werden als auf der dem Extruder 11, 11' zugewandten Extruderanschlussseite.

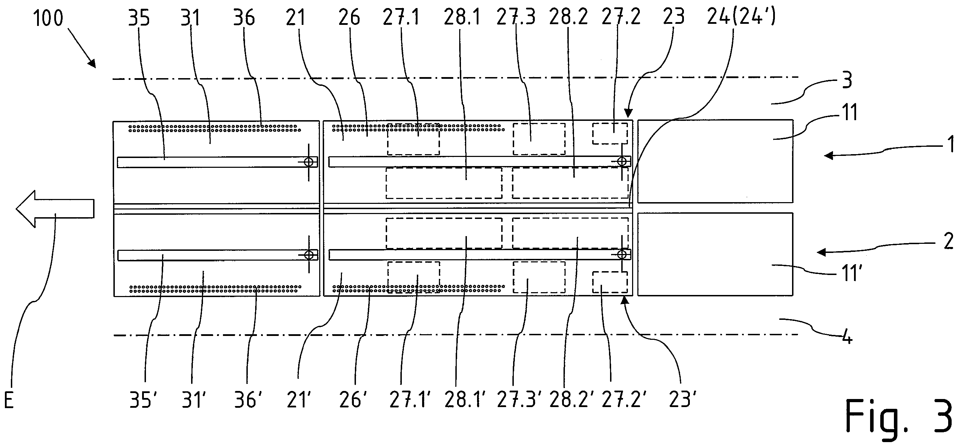

Fig. 3 zeigt den Aufbau einer Duo-Extrusionsanlage 100 mit zwei Extrusionslinien 1, 2 in einer schematischen Ansicht von oben.

An die beiden Extruder 11, 11' rechts im Bild schließt sich die Duo-Kühl- und Kalibriereinheit 20 an. An den den Gängen 3, 4 zugewandten Bedienseiten 23, 23' sind die angetriebenen Einheiten angeordnet, so dass sie direkt zugänglich sind. Dabei handelt es sich beispielsweise um
- eine Vakuumpumpe 27.1, 27.1'.
- eine Wasserpumpe 27.2, 27.2', und
- einen Motor 27.3, 273 für die Höhenverstelleinheit 40.
An den jeweiligen anderen Seiten, den sog. Installationsseiten 24, 24', sind je ein Vakuumtank 28.1, 28.1' und ein Wassertank 28.2, 28.2' angeordnet.

## Patentansprüche

1. Duo-Kühl- und Kalibriereinheit (20) für die Extrusion von Kunststoffhohlprofilen in paarweise nebeneinander zu betreibenden Extrusionslinien (1, 2) umfassend wenigstens:
- ein Grundgestell (29; 29'); und
- eine auf das Grundgestell (29; 29') aufsetzbaren Kalibriervorrichtung mit Kalibrierelementen; und
- eine Kühlvorrichtung mit wenigstens einem Wassertank (28.2, 28.2') und einer Wasserumwälzpumpe (27.2, 27.2') und/oder eine Vakuumvorrichtung mit wenigstens einem Vakuumtank (28.1, 28.1') und einer Vakuumpumpe (27.1, 27.1'); wobei
- die Duo-Kühl- und Kalibriereinheit (20) in zwei spiegelbildlich zueinander ausgebildete Mono-Grundmodule (21; 21') aufgeteilt ist, die jeweils ein Grundgestell (29) mit jeweils einer oberen Aufsatzebene (22, 22') aufweisen und paarweise miteinander kombinierbar und die Mono-Grundmodule (21, 21') ein linkes Mono-Grundmodul (21') und ein in Extrusionsrichtung (E) angeordnetes rechtes Mono-Grundmodul (21) umfassen;
- die Mono-Grundmodule (21; 21')jeweils als Rückseite eine Installationsseite (24, 24') und als Vorderseite eine Bedienseite (23, 23') aufweisen, wobei die Mono-Grundmodule (21; 21') mit ihren jeweiligen zueinander weisenden Installationsseiten (24, 24') kombinierbar sind;
- an der Installationsseite (24, 24') in jedem Mono-Grundmodul (21, 21') ein Wassertank (28.2; 28.2') und/oder ein Vakuumtank (28.1, 28.1') angeordnet ist und eine Wasserpumpe (27.2, 27.2') und/oder eine Vakuumpumpe (27.1, 27.1') der Bedienseite (23, 23') und/oder an einer Stirnseite in Längsrichtung zugewandt angeordnet ist;
**dadurch gekennzeichnet,**
- **dass** die Länge der Duo-Kühl- und Kalibriereinheit (20) durch jeweils wenigstens ein an die Mono-Grundmodule (21; 21') angesetztes Mono-Tendermodul (31, 31') erweiterbar ist, das eine obere Aufsatzebene (32, 32') besitzt;
- **dass** die Mono-Grundmodule (21, 21') und die Mono-Tendermodule (31, 31') an ihrer oberen Aufsatzebene (22, 22', 32, 32'), in dem der Bedienseite (23, 23') zugewandten Randbereich Anschlusselemente (26, 26') für Wasser- und Vakuumleitungen besitzen.

2. Duo-Kühl- und Kalibriereinheit (20) nach Anspruch 1, **dadurch gekennzeichnet, dass** jedes Mono-Grundmodul (21, 21') und/oder jedes Mono-Tendermodul (31, 31') eine Höhenverstelleinrichtung (40) aufweist.

3. Duo-Kühl- und Kalibriereinheit (20) nach Anspruch 1 oder 2, **dadurch gekennzeichnet, dass** beide Mono-Grundmodule (21, 21') eine gemeinsame Höhenverstelleinrichtung (40) aufweisen oder dass die Höhenverstelleinrichtungen (40) der Mono-Grundmodule (21, 21') miteinander koppelbar sind.

4. Duo-Kühl- und Kalibriereinheit (20) nach Anspruch 3, **dadurch gekennzeichnet, dass** das Mono-Tendermodul (31, 31') mit wenigstens einer schwenkbar gelagerten Rolleneinheit (43) versehen ist, das über eine Zugstange an die Höhenverstellung des Mono-Grundmoduls (21, 21') ankoppelbar ist.

5. Duo-Kühl- und Kalibriereinheit (20) nach wenigstens einem der Ansprüche 2 bis 4, **dadurch gekennzeichnet, dass** die Höhenverstelleinrichtung (40) wenigstens zwei schwenkbar am Grundgestell (29, 39) gelagerte Rolleneinheiten ('41, 42, 43) umfasst, welche wenigstens einen geköpft ausgebildeten Hebelarm (44) aufweist, der wenigstens eine Rolle oder einen Stützteller trägt.

6. Duo-Kühl- und Kalibriereinheit (20) nach einem der vorhergehenden Ansprüche, **dadurch gekennzeichnet, dass** in jeder Extrusionslinie (1, 4) eine Mono-Abzugseinheit (61, 61') zur Förderung des extrudierten und gekühlten Kunststoffprofils vorgesehen ist, wobei die Mono-Abzugseinheiten (61, 61') jeweils als Vorder- und Rückseite eine Bedienseite und eine Installationsseite aufweisen und wobei die Abzugseinheiten (61,61') mit ihren jeweiligen zueinander weisenden Installationsseiten miteinander kombinierbar sind.

7. Duo-Kühl- und Kalibriereinheit (20) nach einem der vorhergehenden Ansprüche, **dadurch gekennzeichnet, dass** auf der oberen Aufsatzebene (22, 22') des Mono-Grundmoduls (21, 21') und ggf. der oberen Aufsatzebene (32, 32') auf dem sich daran anschließenden Mono-Tendermodul (31, 31') eine Aufnahmeschiene (25, 25') zur Aufnahme von Kühl- und Kalibrierelementen angebracht ist, die gegenüber der Längsachse schwenkbar gelagert ist, wobei ein Schwenklager an einer Extruderanschlussseite angeordnet ist.

8. Doppel-Extrusionsanlage (100) zur Herstellung von Kunststoffprofilen, die zwei paarweise nebeneinander zu betreibende Extrusionslinien (1, 2) umfasst, mit wenigstens:
- zwei Mono-Extrudern (11, 11') oder einem Doppelextruder;
- eine Duo-Kühl- und Kalibriereinheit (20) nach einem der vorhergehenden Ansprüche, wobei in Bezug auf die Extrusionsrichtung (E), die Installationsseite (24') des linken Mono-Grundmoduls (21') auf der rechten Seite angeordnet ist und die Installationsseite (24) des rechten Mono-Grundmoduls (21) auf der linken Seite angeordnet ist.

## Claims

1. Dual cooling and calibration unit (20) for extruding plastic hollow profiles in extrusion lines (1, 2) operated in a manner adjacent to one another in pairs, comprising at least:
- one base framework (29; 29'); and
- one calibration device having calibration elements and that can be mounted on the base framework (29; 29'); and
- one cooling device having at least one water tank (28.2, 28.2') and one water circulating pump (27.2, 27.2') and/or one vacuum device having at least one vacuum tank (28.1, 28.1') and one vacuum pump (27.1, 27.1');
wherein
the dual cooling and calibration unit (20) is divided into two base mono-modules (21; 21') designed so as to be mirror-symmetrical with respect to one another, each of which has a base framework (29) having an upper top-side plane (22, 22') in each case and able to be combined with one another in pairs, and
the base mono-modules (21, 21') comprise a left-hand base mono-module (21') and a right-hand base mono-module (21) arranged in the extrusion direction (E);
- each of the base mono-modules (21; 21') has an installation side (24, 24') as a rear side and an operating side (23, 23') as a front side, wherein the base mono-modules (21; 21') can be combined by way of their respective installation sides (24, 24') that point towards one another;
- a water tank (28.2; 28.2') and/or a vacuum tank (28.1, 28.1') is arranged on the installation side (24, 24') in each base mono-module (21, 21') and a water pump (27.2, 27.2') and/or a vacuum pump (27.1, 27.1') is arranged so as to face towards the operating side (23, 23') and/or a face side in the longitudinal direction;
**characterized**
- **in that** the length of the dual cooling and calibration unit (20) can be extended by in each case at least one tender mono-module (31, 31') attached to the base mono-modules (21, 21') and having an upper top-side plane (32, 32');
- **in that** the base mono-modules (21, 21') and the tender mono-modules (31, 31') have connecting elements (26, 26') for water and vacuum lines on their upper top-side plane (22, 22', 32, 32') in the edge region facing towards the operating side (23, 23').

2. Dual cooling and calibration unit (20) according to Claim 1, **characterized in that** each base mono-module (21, 21') and/or each tender mono-module (31, 31') has a height adjustment device (40).

3. Dual cooling and calibration unit (20) according to Claim 1 or 2, **characterized in that** both base mono-modules (21, 21') have a common height adjustment device (40) or **in that** the height adjustment devices (40) of the base mono-modules (21, 21') can be coupled to one another.

4. Dual cooling and calibration unit (20) according to Claim 3, **characterized in that** the tender mono-module (31, 31') is provided with at least one pivotably mounted roller unit (43) that can be coupled to the height adjustment of the base mono-module (21, 21') via a tension rod.

5. Dual cooling and calibration unit (20) according to at least one of Claims 2 to 4, **characterized in that** the height adjustment device (40) comprises at least two roller units ('41, 42, 43) that are mounted on the base framework (29, 39) so as to be pivotable and have at least one lever arm (44) of cranked design that bears at least one roller or one support plate.

6. Dual cooling and calibration unit (20) according to one of the preceding claims, **characterized in that** a drawing-off mono-unit (61, 61') is provided in each extrusion line (1, 4) for delivering the extruded and cooled plastic profile, wherein each of the drawing-off mono-units (61, 61') has an operating side and an installation side as front and rear side and wherein the drawing-off mono-units (61, 61') can be combined with one another by way of their respective installation sides that point towards one another.

7. Dual cooling and calibration unit (20) according to one of the preceding claims, **characterized in that** a receiving rail (25, 25') for receiving cooling and calibration elements is attached to the upper top-side plane (22, 22') of the base mono-module (21, 21') and possibly the upper top-side plane (32, 32') on the tender mono-module (31, 31') that adjoins said base mono-module (21, 21'), said receiving rail (25, 25') being mounted so as to be pivotable in relation to the longitudinal axis, wherein a pivot bearing is arranged on an extruder connection side.

8. Dual-extrusion installation (100) for producing plastic profiles and comprising two extrusion lines (1, 2) operated in a manner adjacent to one another in pairs, having at least:
- two mono-extruders (11, 11') or one dual extruder;
- one dual cooling and calibration unit (20) according to one of the preceding claims, wherein the installation side (24') of the left-hand base mono-module (21') is arranged on the right-hand side and the installation side (24) of the right-hand base mono-module (21) is arranged on the left-hand side in terms of the extrusion direction (E).

## Revendications

1. Double unité de refroidissement et d'étalonnage (20) destinée à l'extrusion de profilés creux en matière synthétique et se présentant sous la forme de lignes d'extrusion (1, 2) fonctionnant côte à côte par paires, ladite unité comprenant au moins :
- un cadre de base (29 ; 29') ; et
- un dispositif d'étalonnage pouvant être placé sur le cadre de base (29 ; 29') et pourvu d'éléments d'étalonnage ; et
- un dispositif de refroidissement pourvu d'au moins un réservoir d'eau (28.2, 28.2') et d'une pompe de circulation d'eau (27.2, 27.2') et/ou un dispositif à vide pourvu d'au moins un réservoir à vide (28.1, 28.1') et d'une pompe à vide (27.1, 27.1') ;
la double unité de refroidissement et d'étalonnage (20) étant divisée en deux modules de base simples (21 ; 21') qui sont formés en symétrie de miroir l'un par rapport à l'autre, chacun comportant un cadre de base (29) pourvu d'un plan de placement supérieur (22, 22'), les modules de base simples pouvant être combinés l'un à l'autre en une paire, et les modules de base simples (21, 21') comprenant un module de base simple gauche (21') et un module de base simple droit (21) disposé dans la direction d'extrusion (E) ;
- les modules de base simples (21 ; 21') comprenant chacun un côté installation (24, 24') comme côté arrière et un côté commande (23, 23') comme côté avant, les modules de base simples (21 ; 21') pouvant être combinés de manière à ce que leurs côtés installation respectifs (24, 24') soient dirigés l'un vers l'autre ;
- un réservoir d'eau (28.2 ; 28.2') et/ou un réservoir à vide (28.1, 28.1') étant disposé du côté installation (24, 24') dans chaque module de base simple (21, 21') et une pompe à eau (27.2, 27.2') et/ou une pompe à vide (27.1, 27.1') étant disposées du côté commande (23, 23') et/ou sur un côté frontal en étant dirigées dans la direction longitudinale ;
**caractérisée en ce que**
- la longueur de la double unité de refroidissement et d'étalonnage (20) peut être étendue par au moins un module tendeur simple (31, 31') qui est placé au niveau des modules de base simples (21 ; 21') et qui possède un plan de placement supérieur (32, 32') ;
- les modules de base simples (21, 21') et les modules tendeurs simples (31, 31') possèdent au niveau de leur côté de placement supérieur (22, 22', 32, 32'), dans la région de bord dirigée vers le côté commande (23, 23'), des éléments de raccordement (26, 26') destinés à des conduites d'eau et de vide.

2. Double unité de refroidissement et d'étalonnage (20) selon la revendication 1, **caractérisée en ce que** chaque module de base simple (21, 21') et/ou chaque module tendeur simple (31, 31') comporte un moyen de réglage en hauteur (40).

3. Double unité de refroidissement et d'étalonnage (20) selon la revendication 1 ou 2, **caractérisée en ce que** les deux modules de base simples (21, 21') comportent un moyen de réglage en hauteur commun (40) ou les moyens de réglage en hauteur (40) des modules de base simples (21, 21') peuvent être accouplés l'un à l'autre.

4. Double unité de refroidissement et d'étalonnage (20) selon la revendication 3, **caractérisée en ce que** le module tendeur simple (31, 31') est pourvu d'au moins une unité à rouleau (43) montée à pivotement, laquelle peut être accouplée au réglage en hauteur du module de base simple (21, 21') par le biais d'une barre de traction.

5. Double unité de refroidissement et d'étalonnage (20) selon l'une au moins des revendications 2 à 4, **caractérisée en ce que** le moyen de réglage en hauteur (40) comprend au moins deux unités à rouleau ('41, 42, 43) montées à pivotement sur le cadre de base (29, 39) et comporte au moins un bras de levier coudé (44) qui porte au moins un rouleau ou une plaque de support.

6. Double unité de refroidissement et d'étalonnage (20) selon l'une des revendications précédentes, **caractérisée en ce que** dans chaque ligne d'extrusion (1, 4), une unité d'extraction simple (61, 61') est prévue pour transporter le profilé en matière synthétique extrudé et refroidi, les unités d'extraction simples (61, 61') comportant chacune un côté commande et un côté installation respectivement comme côté avant et côté arrière et les unités d'extraction (61, 61') pouvant être combinées l'une avec l'autre de manière à ce que leurs côtés installation respectifs soient dirigés l'un vers l'autre.

7. Double unité de refroidissement et d'étalonnage (20) selon l'une des revendications précédentes, **caractérisée en ce qu'**un rail de réception (25, 25') destiné à recevoir des éléments de refroidissement et d'étalonnage est monté, dans le plan de placement supérieur (22, 22') du module de base simple (21, 21') et éventuellement dans le plan de placement supérieur (32, 32'), sur le module tendeur simple contigu (31, 31'), lequel rail de réception est monté à pivotement par rapport à l'axe longitudinal, un palier de pivotement étant disposé sur un côté de raccordement d'extrudeuse.

8. Installation d'extrusion double (100) destinée à la production de profilés en matière synthétique, laquelle comprend deux lignes d'extrusion (1, 2) fonctionnant côte à côte par paire, ladite installation comprenant au moins :
- deux extrudeuses simples (11, 11') ou une extrudeuse double ;
- une double unité de réfrigération et d'étalonnage (20) selon l'une des revendications précédentes,
le côté installation (24') du module de base simple gauche (21') étant disposé du côté droit, et le côté installation (24) du module de base simple droit (21) étant disposé du côté gauche, par rapport à la direction d'extrusion (E).
